# EUROPÄISCHE PATENTSCHRIFT

(11) **EP 2 224 816 B1**
(45) Veröffentlichungstag und Bekanntmachung des Hinweises auf die Patenterteilung: **08.02.2012**
(21) Anmeldenummer: 08847928.2
(22) Anmeldetag: 29.10.2008
(51) Int. Cl.: A22C 25/00, A22C 25/16

(54) **VORRICHTUNG ZUM TRENNEN VON FILETS VON DER WIRBELSÄULE GEKÖPFTER, GESCHLACHTETER UND IN IHRER BAUCHHÖHLE GEÖFFNETER FISCHE UNTER DURCHSCHNEIDEN DES VON BAUCH- UND RÜCKENMESSERN UM DIE WIRBELSÄULE BELASSENEN STEGES SOWIE FILETIERMASCHINE MIT EINER SOLCHEN VORRICHTUNG**
DEVICE FOR SEPARATING FILETS FROM THE SPINAL COLUMN OF BEHEADED, SLAUGHTERED FISH WITH OPEN ABDOMINAL CAVITY BY CUTTING THE BRIDGE LEFT BY ABDOMINAL AND BACK BLADES AROUND THE SPINAL COLUMN AND FILLETING MACHINE COMPRISING SUCH A DEVICE
DISPOSITIF POUR DÉTACHER DES FILETS DE LA COLONNE VERTÉBRALE DE POISSONS ÉTÊTÉS, ABATTUS ET OUVERTS AU NIVEAU DE LEUR CAVITÉ ABDOMINALE PAR SECTIONNEMENT DE L'ÉLÉMENT JOINTIF LAISSÉ PAR LES COUTEAUX À VENTRE ET LES COUTEAUX À DOS AUTOUR DE LA COLONNE VERTÉBRALE ET MACHINE À FILETER COMPRENANT UN TEL DISPOSITIF

(30) Priorität: 09.11.2007 DE 102007053904
(43) Veröffentlichungstag der Anmeldung: 08.09.2010
(73) Patentinhaber: Nordischer Maschinenbau Rud. Baader GmbH + Co. KG, 23560 Lübeck (DE)
(72) Erfinder: FINKE, Hans, 23552 Lübeck (DE); JÜRS, Michael, 23683 Haffkrug (DE)
(74) Vertreter: Wenzel & Kalkoff
(86) Internationale Anmeldenummer: PCT/EP2008/009351
(87) Internationale Veröffentlichungsnummer: WO 2009/059758

(56) Entgegenhaltungen:
- DE-A1- 1 454 087
- DE-C- 943 612
- DE-C1- 19 881 497
- GB-A- 872 801
- US-A- 2 381 560

## Beschreibung

Die Erfindung betrifft eine Vorrichtung zum Trennen von Filets von der Wirbelsäule geköpfter, geschlachteter und in ihrer Bauchhöhle geöffneter Fische unter Durchschneiden des von Bauch- und Rückenmessern um die Wirbelsäule belassenen Steges, wobei die Fische auf Transportsätteln transportiert werden, umfassend eine obere Grätenführung, eine untere Grätenführung sowie ein Trennaggregat, das zum Lösen der Filets von der Wirbelsäule ein Trennmittel umfasst, dem eine korrespondierende Gegenlage zugeordnet ist, wobei das Trennaggregat aus einer Warteposition in eine Arbeitsposition und zurück bewegbar ist. Des Weiteren betrifft die Erfindung eine Filetiermaschine zum Filetieren geköpfter, geschlachteter und in ihrer Bauchhöhle geöffneter Fische, umfassend Rückenmesser zum Freilegen der Rückenspeichen bis an die Wirbelsäule heran, Bauchmesser zum Freilegen der Bauchspeichen im Schwanzbereich bis an die Wirbelsäule heran, eine Vorrichtung zum Freischneiden der Flankengräten, eine Vorrichtung zum Trennen der Filets von der Wirbelsäule unter Durchschneiden des von Bauch- und Rückenmessern um die Wirbelsäule belassenen Steges, einen endlosen Förderer zum Transport der Fische Schwanz voraus sowie eine Anzahl auf dem Förderer angeordneter Fischsättel zur sicheren Aufnahme der Fische in ihrer Bauchhöhle.

Solche Vorrichtungen kommen in der Fisch verarbeitenden Industrie zum Einsatz, um Fische, insbesondere der Spezies Lachs, automatisch zu Filetieren. Die Fische werden üblicherweise mittels Transportsätteln zu den einzelnen Bearbeitungsstationen transportiert, u.a. auch der Vorrichtung zum Trennen von Filets von der Wirbelsäule.

Ein wesentlicher Arbeitsschritt ist das vollständige Trennen von mittels Bauchschnitten und Rückenschnitten bereits teilweise von der Wirbelsäule gelöster Filets. Nach dem Ausführen der Bauchschnitte und Rückenschnitte verbleibt um die Wirbelsäule ein Steg. Mittels der Vorrichtung zum Trennen der Filets von der Wirbelsäule, die auch als Trennwerkzeug bezeichnet wird, kann der Steg vom Schwanzbereich, also der Schwanzflosse, bis zum Anfang der Bauchhöhle getrennt werden, so dass die Filets vollständig von der Wirbelsäule gelöst sind und z.B. auf ein unterhalb der Vorrichtung angeordnetes Transportband oder dergleichen fallen. Die oberen und unteren Grätenführungen dienen dazu, den Fisch in der optimalen Bearbeitungsposition auf dem Transportsattel zu halten bzw. zu führen. Das Trennaggregat ist üblicherweise zu beiden Seiten des zu bearbeitenden Fisches angeordnet, so dass die Filets parallel oder zeitversetzt von der Wirbelsäule getrennt werden können.

Aus der DE 198 81 497 C1 ist eine Filetiermaschine bekannt, bei der die Vorrichtung zum Trennen der Filets von der Wirbelsäule neben den notwendigen Grätenführungen ein Trennaggregat aufweist, das zwei parallel beabstandete Kreismesser aufweist. Die Kreismesser sind aus einer oberen Position oberhalb der unteren Grätenführung in eine untere Position und umgekehrt bewegbar, wobei die Kreismesser des Weiteren zueinander in axialer Richtung verschiebbar sind. Die Ausweichbewegung in axialer Richtung erfolgt gegen ein Federelement. Die Schnittgegenlagen für die Kreismesser sind unabhängig von den Kreismessern im Bereich der unteren Grätenführung angeordnet. Die Schnittgegenlagen ihrerseits sind um einen Drehpunkt schwenkbar. In der Bearbeitungsposition befinden sich die Kreismesser jeweils zwischen einer inneren und einer äußeren Schnittgegenlage. Um aus der unteren Bearbeitungsposition in die obere Warte- (oder auch Ausweich-)Position zu gelangen, werden die Kreismesser angehoben, während die Schnittgegenlagen in der unteren Position verbleiben. Zum Ausweichen sind die Schnittgegenlagen drehbar an einem eigenen Drehpunkt gelagert. Mit anderen Worten sind die Kreismesser unabhängig von den Schnittgegenlage bewegbar. Das führt dazu, dass die Kreismesser insbesondere während der Bearbeitung an den Schnittgegenlagen anlaufen, wodurch es zu einem Verschleiß von Kreismesser, Schnittgegenlage und Flossenleitblech kommt. Auch ist die Steuerung des bekannten Trennaggregats insbesondere aufgrund der Vielzahl der zu steuernden Elemente aufwendig.

Es ist daher Aufgabe der vorliegenden Erfindung, eine einfach handhabbare und verschleißarme Vorrichtung zu schaffen, mittels der die Filets sicher und zuverlässig von der Wirbelsäule getrennt werden.

Diese Aufgabe wird durch eine Vorrichtung mit den eingangs genannten Merkmalen dadurch gelöst, dass die Gegenlage am Trennaggregat angeordnet sind. Durch die Kopplung der Gegenlage mit dem Trennaggregat wird das Anlaufen der Kreismesser an den Gegenlagen wirksam verhindert, so dass kein Verschleiß auftritt. Anders ausgedrückt führt die Gegenlage die Bewegungen des Kreismessers mit aus, so dass eine Relativbewegung zwischen Kreismesser und Gegenlage vermieden wird. Des Weiteren reduziert sich der Steuerungsaufwand durch die Kopplung der Gegenlage mit dem Kreismesser.

Eine zweckmäßige Weiterbildung der Erfindung zeichnet sich dadurch aus, dass die beiden Teilaggregate des Trennaggregats zu beiden Seiten des zu bearbeitenden Fisches einander gegenüber liegen und jeweils um eine Schwenkachse schwenkbar gelagert sind. Durch diese Ausbildung wird der Effekt einer einfachen Steuerung sowie Handhabung unterstützt.

Vorzugsweise ist den beiden Teilaggregaten mindestens ein Stellelement zur Ausführung der Schwenkbewegung um die jeweilige Schwenkachse zugeordnet. Diese Ausbildung stellt auf überraschend einfache Weise sicher, dass die Position der Kreismesser insbesondere auch während des Trennschnittes veränderbar ist, um z.B. auf die unterschiedlichen Geometrien der Fische Rücksicht nehmen zu können.

Eine bevorzugte Weiterbildung ist dadurch gekennzeichnet, dass mindestens einem der beiden Teilaggregate ein Ausgleichselement zugeordnet ist, derart, dass der Abstand der beiden Teilaggregate zueinander unabhängig von dem Stellelement variabel ist. Dadurch kann der zuvor beschriebene Effekt der individuellen Positionierung der Kreismesser in Bezug auf den zu bearbeitenden Fisch verstärkt werden. Vorteilhafterweise sind die Kreismesser einerseits um die jeweilige Schwenkachse schwenkbar und andererseits in axialer Richtung ortsfest. Durch den Verzicht auf eine Verschiebung der Kreismesser in axialer Richtung wird einerseits der mechanische Aufwand der Vorrichtung reduziert und andererseits die Steuerung des Trennaggregats vereinfacht. Des Weiteren wird durch den damit ereichten konstanten Abstand zwischen Kreismesser und Gegenlage eine verbesserte Schnittführung gewährleistet.

Eine bevorzugte Weiterbildung ist dadurch gekennzeichnet, dass am Trennaggregat für jedes Kreismesser eine Messerabdeckung angeordnet ist. Damit wird der Steuerungsaufwand zusätzlich reduziert. Des Weiteren wird durch die Kopplung der Messerabdeckungen am Trennaggregat ein Anlaufen der Kreismesser an den Messerabdeckungen verhindert, wodurch Verschleiß vermieden wird.

Vorteilhafterweise sind die Messerabdeckungen zusammen mit den Kreismessern um die jeweilige Schwenkachse des Teilaggregats schwenkbar gelagert. Durch die Zusammenlegung der Schwenkachsen von Kreismesser, Gegenlage und Messerabdeckung wird der Steuerungsaufwand weiter reduziert.

Eine zweckmäßige Weiterbildung der Erfindung ist dadurch gekennzeichnet, dass in Fischlaufrichtung vor dem Trennaggregat ein Detektionsmittel zum Erkennen eines einlaufenden Fisches angeordnet ist. Damit wird erreicht, dass der für den Trennschnitt erforderliche Abstand der Kreismesser erst eingestellt werden muss, wenn der Fisch mit seiner Schwanzflosse sicher zwischen den Kreismessern liegt.

Die Aufgabe wird auch durch eine Filetiermaschine der eingangs genannten Art dadurch gelöst, dass die Vorrichtung zum Trennen der Filets von der Wirbelsäule unter Durchschneiden des von Bauch- und Rückenmessern um die Wirbelsäule belassenen Steges nach einem der Ansprüche 1 bis 14 ausgebildet ist. Die sich daraus ergebenden Vorteile wurden bereits im Zusammenhang mit der Vorrichtung beschrieben, so dass zur Vermeidung von Wiederholungen auf die entsprechenden Passagen verwiesen wird.

Weitere zweckmäßige und/oder vorteilhafte Merkmale ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine Ansicht der erfindungsgemäßen Vorrichtung in Fischlaufrichtung,

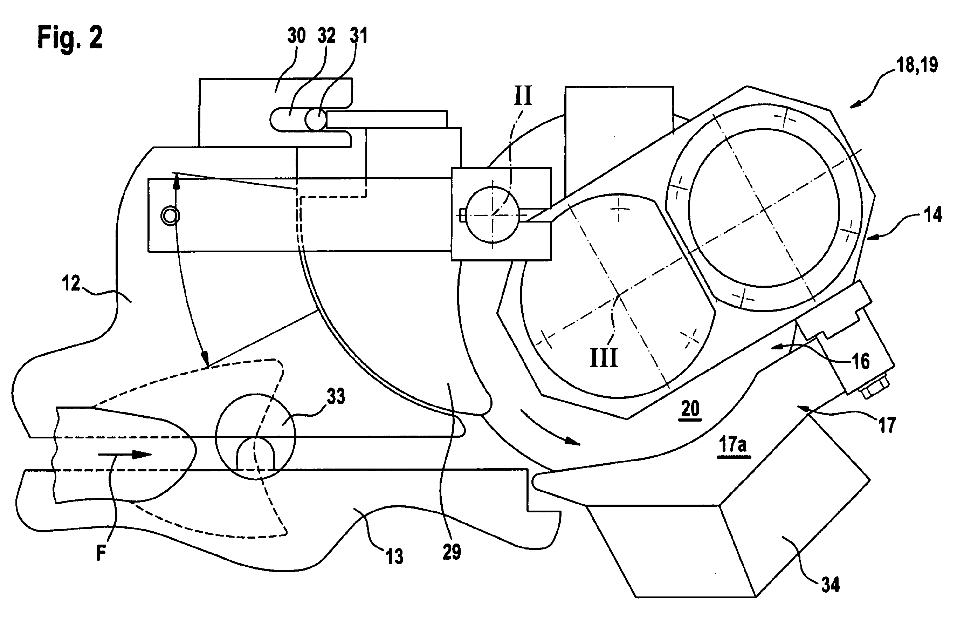

- Fig. 2: eine Seitenansicht der Vorrichtung gemäß Figur 1,

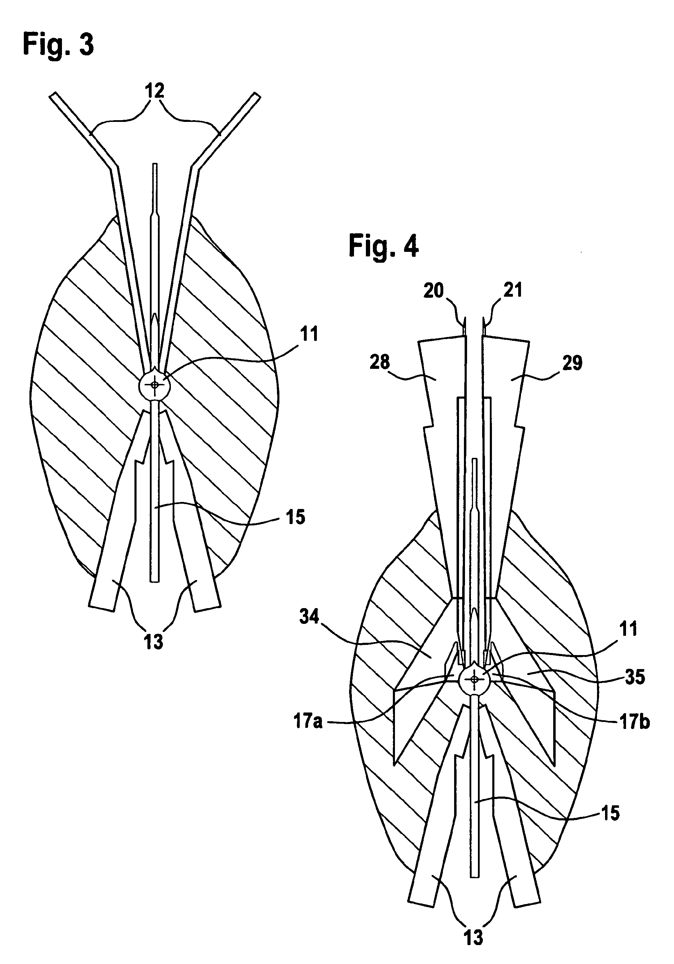

- Fig. 3: eine Schnittdarstellung durch einen Fisch vor der Bearbeitung,
- Fig. 4: die Schnittdarstellung des Fisches gemäß Figur 3 mit dem Trennaggregat in Bearbeitungsposition, und
- Fig. 5: eine schematische Darstellung der Schnittführung zum Trennen der Filets.

Die in der Zeichnung gezeigte Vorrichtung dient zum vollständigen Trennen von Filets von der Wirbelsäule geköpfter, geschlachteter und in ihrer Bauchhöhle geöffneter Fische der Spezies Lachs. Selbstverständlich kann die Vorrichtung auch zum Trennen von Filets anderer Spezies eingesetzt werden. Auch wenn die Vorrichtung am Beispiel eines in Fischlaufrichtung Schwanz voraus transportierten Fisches beschrieben wird, können die Fische auch Kopf voraus transportiert und verarbeitet werden.

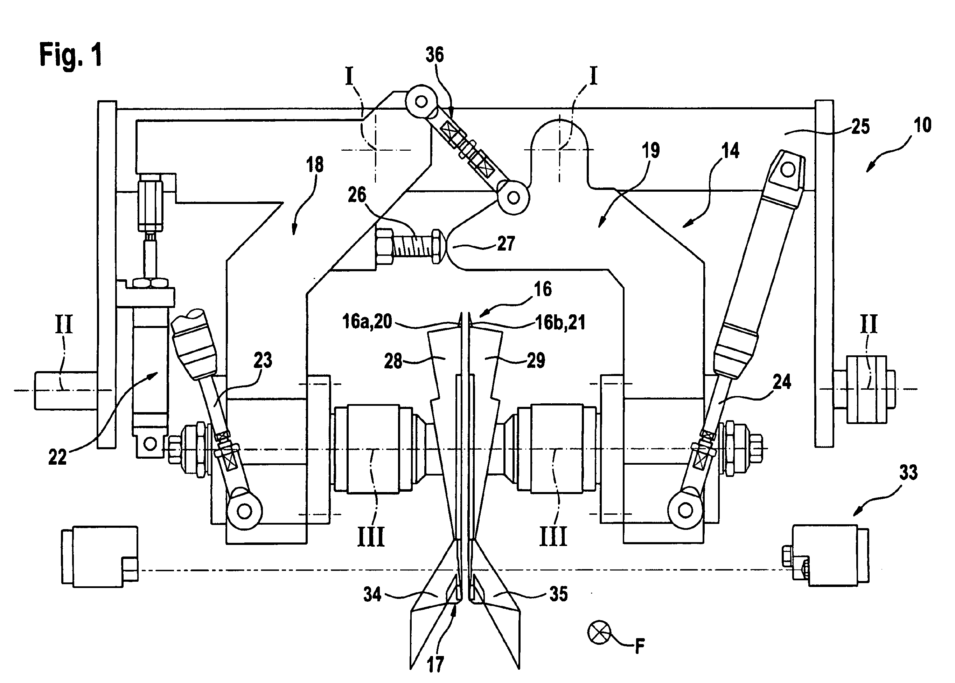

In der Figur 1 ist eine Vorrichtung 10 zum Trennen von Filets von der Wirbelsäule 11 geköpfter, geschlachteter und in ihrer Bauchhöhle geöffneter Fische gezeigt. Die Vorrichtung 10 umfasst eine obere Grätenführung 12, eine untere Grätenführung 13 sowie ein Trennaggregat 14 zum Lösen der Filets von der Wirbelsäule 11. Mittels der Grätenführungen 12, 13 wird der zu bearbeitende Fisch, der üblicherweise auf einem Transportsattel 15 in den Bereich des Trennaggregats 14 transportiert wird, in einer definierten Position gehalten, derart, dass der Fisch in Bezug auf das Trennaggregat 14 in einer definierten Lage liegt. Die untere Grätenführung 13 ist üblicherweise ortsfest und feststehend ausgebildet. Die obere Grätenführung 12 ist zwar einerseits feststehend ausgebildet. Andererseits ist die obere Grätenführung 12 aber auch bewegbar ausgebildet, derart, dass die obere Grätenführung 12 z.B. in Abhängigkeit des Durchmessers der Mittelgräte 11 nach oben ausweichen kann.

Das Trennaggregat 14 ist aus einer oberen Warteposition, in der ein Eingriff in den Fisch verhindert wird, in eine untere Bearbeitungsposition, in der das Trennaggregat 14 die Filets von der Wirbelsäule 11 löst, und umgekehrt bewegbar. Das Trennaggregat 14 umfasst ein Trennmittel 16, mittels dem der eigentliche Lösevorgang erfolgt. Hierzu ist dem Trennmittel 16 eine korrespondierende Gegenlage 17 zugeordnet. Bevorzugt umfasst das Trennaggregat 14 zwei Teilaggregate 18, 19, die jeweils ein Trennmittel 16a und 16b aufweisen. Jedem Trennmittel 16a, 16b ist wiederum eine entsprechende Gegenlage 17a bzw. 17b zugeordnet. Als Trennmittel 16a, 16b sind insbesondere Kreismesser 20, 21 vorgesehen. Wie die Kreismesser 20, 21 sind auch die Gegenlagen 17a, 17b am Trennaggregat 14 angeordnet und mit diesem aus der Warteposition in die Bearbeitungsposition und umgekehrt bewegbar.

Die beiden Teilaggregate 18, 19 liegen in Bezug auf den zu bearbeitenden Fisch auf einander gegenüber liegenden Seiten. Die diametral einander gegenüber liegenden Teilaggregate 18, 19 sind jeweils um eine Schwenkachse I schwenkbar gelagert. Die Schwenkachsen I verlaufen im Wesentlichen parallel zu den Grätenführungen 12, 13. Anders ausgedrückt weisen die Schwenkachsen I in Fischlaufrichtung F, so dass die Teilaggregate 18, 19 quasi aufeinander zu und voneinander weg klappbar sind. Zur Ausführung von Schwenkbewegungen um die Schwenkachse I ist den beiden Teilaggregaten 18, 19 im gezeigten Ausführungsbeispiel ein Stellelement 22 zugeordnet. Das Stellelement 22 kann als Pneumatikzylinder oder dergleichen ausgebildet sein. Da die beiden Teilaggregate 18, 19 über ein gemeinsames Stellelement 22 verfügen, stehen die beiden Teilaggregate 18, 19 über eine Einrichtung 36 zur Synchronisation in Wirkverbindung, so dass die auf das eine Teilaggregat 18 wirkende Stellbewegung auf das andere Teilaggregat 19 übertragbar ist. Selbstverständlich können auch jedem Teilaggregat 18, 19 separate Stellelemente 22 zugeordnet werden, so dass in diesem Fall auf die Einrichtung 36 verzichtet werden kann.

Wie erwähnt, ist bevorzugt lediglich einem Teilaggregat 18 ein Stellelement 22 zugeordnet. Dieses steht belastungsfrei mit dem Teilaggregat 18 in Wirkverbindung. Konkret ruht das Teilaggregat 18 quasi lose auf dem Stellelement 22, derart, dass es von diesem abhebbar ist. Mindestens einem der Teilaggregate, vorzugsweise jedoch beiden Teilaggregaten 18, 19 ist ein Ausgleichselement 23, 24 zugeordnet. Die Ausgleichselemente 23, 24, die z.B. als Druckzylinder, als Feder oder dergleichen ausgebildet sein können, sind einerseits an den Teilaggregaten 18, 19 und andererseits an einem ortsfesten Rahmen 25, an dem auch die Teilaggregate 18, 19 schwenkbar gelagert sind, befestigt. Die Ausgleichsbewegung gegen die Kraft der Ausgleichselemente 23, 24 kann unabhängig vom Stellelement 22 erfolgen, so dass der Abstand der beiden Teilaggregate 18, 19 bzw. der Kreismesser 20, 21 variabel ist. Insbesondere ist mittels des Stellelementes 22 und/oder den Ausgleichselementen 23, 24 eine Wechselposition für die Kreismesser 20, 21 erreichbar.

Wie bereist erwähnt, sind die Kreismesser 20, 21 zusammen mit den Teilaggregaten 18, 19 mittels des Stellelementes 22 und/oder mittels der Ausgleichselemente 23, 24 um die Schwenkachsen I schwenkbar. In axialer Richtung, also in Richtung der Rotationsachse III sind die Kreismesser 20, 21 dagegen ortsfest. Anders ausgedrückt sind die Kreismesser 20, 21 axial nicht verschiebbar. Während der Schwenkbewegung der Teilaggregate 18, 19 um die Schwenkachse I sind die Kreismesser 20 bzw. 21 sowie die korrespondierenden Gegenlagen 17a bzw. 17b jeweils eines Teilaggregats 18 bzw. 19 relativ zueinander feststehend. Das bedeutet, dass zwischen Kreismessern 20, 21 und Gegenlagen 17a, 17b keine Relativbewegung stattfindet. Die Schwenkbewegung der Teilaggregate 18, 19 auf einander zu und voneinander weg ist jedoch zur Einhaltung eines Mindestabstands zwischen den Teilaggregaten 18, 19 bzw. genauer zwischen den Kreismessern 20, 21 durch ein Anschlagelement 26 begrenzt. Das Anschlagelement 26, das beispielsweise eine Stellschraube sein kann, ist einem der beiden Teilaggregate 18 zugeordnet und mit einem Vorsprung 27 des anderen Teilaggregats 19 in Wirkverbindung.

Neben den beschriebenen Schwenkbewegungen um die Schwenkachse I zur Einstellung des Spaltes zwischen den Kreismessern 20, 21 sowie zum Positionieren der Kreismessern unter Berücksichtigung der Geometrie der zu verarbeitenden Fische sind beide Teilaggregate 18, 19 des Weiteren um eine Schwenkachse II aus einer oberen Warteposition in eine untere Bearbeitungsposition und umgekehrt schwenkbar. Die Schwenkachse II verläuft quer zu den Grätenführungen 12, 13. Anders ausgedrückt verläuft die Schwenkachse II in Richtung der Rotationsachse III. Vorzugsweise verlaufen die Schwenkachsen II und die Rotationsachsen III parallel versetzt zueinander, wobei die Schwenkachsen II oberhalb der Rotationsachsen III liegen.

Jedem Kreismesser 20, 21 ist eine Messerabdeckung 28, 29 zugeordnet, wobei die Messerabdeckungen 28, 29 am Trennaggregat 14 angeordnet sind. Das bedeutet, dass die Messerabdeckungen 28, 29 den Schwenkbewegungen des Trennaggregats 14 folgen. Genauer sind die Messerabdeckungen 28, 29 zusammen mit den Kreismessern 20, 21 um die Schwenkachse I des entsprechenden Teilaggregats 18, 19 schwenkbar gelagert. Des Weiteren sind die Messerabdeckungen 28, 29 drehbar bzw. schwenkbar um die Rotationsachse III der Kreismesser 20, 21 ausgebildet. Zum Auslösen der Schwenkbewegung um die Rotationsachse III stehen die Messerabdeckungen 28, 29 mit der oberen Grätenführung 12 in Wirkverbindung. Die obere Grätenführung 12 weist ein gabelförmiges Führungselement 30 auf, in dem ein Bolzen 31, Führungsstift oder dergleichen geführt ist. Das Führungselement 30 ist fest mit der oberen Grätenführung 12 verbunden. Der Bolzen 31 ist innerhalb des im Wesentlichen horizontal verlaufenden und einseitig offenen Langlochs 32 bewegbar und fest mit der Messerabdeckung 28, 29 verbunden. Sobald die obere Grätenführung 12 eine Ausweichbewegung ausführt, folgen die Messerabdeckungen 28, 29 dieser Bewegung, wobei die auf und ab Bewegung der Grätenführung 12 in eine Schwenkbewegung der Messerabdeckungen 28, 29 um die Rotationsachse III umgesetzt wird. Das bedeutet, dass die Messerabdeckungen 28, 29 relativ zu den Kreismessern 20, 21 bewegbar, nämlich schwenkbar sind.

Zur Erkennung, wann ein Fisch in den Bereich der Vorrichtung 10 einläuft, ist in Fischlaufrichtung F vor dem Trennaggregat 14 ein Detektionsmittel 33 angeordnet. Das Detektionsmittel 33 kann z.B. eine Lichtschranke sein. Andere Mittel mit einem Sender und einem Empfänger oder einseitig angeordnete Elemente sind ebenfalls einsetzbar. In weiteren Ausgestaltungen können den Gegenlagen 17a, 17b Leitelemente 34, 35 zugeordnet sein. Mittels der Leitelemente 34, 35 sind die vollständig gelösten Filets aus der Vorrichtung 10 auf darunter angeordnete (nicht dargestellte) Transportmittel oder dergleichen leitbar.

Die zuvor beschriebene Vorrichtung 10 kann als Einzelvorrichtung, als Nachrüstsatz oder als Bestandteil einer Filetiermaschine eingesetzt werden.

Im Folgenden wird das Verfahrensprinzip anhand der Figuren näher beschrieben: Der auf dem Transportsattel 15 befindliche Fisch, der bereits den Bauchschnitten und Rückenschnitten unterzogen wurde, wird in Fischlaufrichtung F Schwanz voraus in Richtung der Vorrichtung 10 transportiert. Um die Schwanzflosse sicher zwischen den Kreismessern 20, 21 zu positionieren/einzufädeln, sind die Kreismesser 20, 21 auseinander gefahren. Anders ausgedrückt sind die Kreismesser 20, 21 um die Schwenkachse I auseinander geschwenkt, so dass die Schwanzflosse zwischen den Kreismessern 20, 21 einläuft. Das Einlaufen des Fisches wird mittels des Detektionselementes 33 festgestellt. Erst wenn sich die Schwanzflosse zwischen den Kreismessern 20, 21 befindet, werden diese auf den eigentlichen Schnittabstand geschwenkt. In Schnittstellung sind die Kreismesser 20, 21 vorzugsweise parallel gestellt und mit einem definierten Abstand versehen.

Während des Schnittes lässt sich der Abstand der Kreismesser 20, 21 z.B. durch das Stellelement 22 verändern, indem die Teilaggregate 18, 19 um die Schwenkachse I geschwenkt werden. Alternativ oder kumulativ lassen sich die Kreismesser 20, 21 z.B. durch eine Gräte, die dicker als der eingestellte Abstand der Kreismesser 20, 21 ist, gegen die Kraft/den Widerstand der Ausgleichselemente 23, 24 auseinander drücken. Der Abstand der Kreismesser 20, 21 zur unteren Grätenführung 13 lässt sich durch Schwenken der Teilaggregate 18, 19 um die Schwenkachse II verändern. Die Schwenkachse II, die oberhalb der unteren Grätenführung 13 liegt, ist derart gewählt, dass eine Schwenkbewegung der Teilaggregate 18, 19 mit der Bewegung der Transportsättel 15 erfolgt, so dass die Teilaggregate 18, 19 über die Transportsättel 15 gehoben werden.

Die Messerabdeckungen 28, 29 verhindern, dass sich oberhalb der Wirbelsäule 11 befindliche Gräten und Flossen von den Kreismessern 20, 21 erfasst werden. Die Messerabdeckungen 28, 29 werden durch die obere Grätenführung 12 gesteuert. Anders ausgedrückt schleppt die obere Grätenführung 12 die Messerabdeckungen 28, 29 mit, die so in der Höhe nach der einlaufenden Fischgröße gesteuert werden. Dabei schwenken die Messerabdeckungen 28, 29 um die Rotationsachse III. Die Kreismesser 20, 21 werden durch die Haltekraft der Ausgleichselemente 23, 24 an die Wirbelsäule 11 gedrückt, so dass sie eng anliegend zu beiden Seiten an der Wirbelsäule 11 entlang schneiden. Bevor der Transportsattel 15 die Kreismesser 20, 21 erreicht, müssen die Kreismesser 20, 21 angehoben und über den Transportsattel 15 geführt werden. Durch eine zuvor erfolgte Ermittlung der Fischgröße und ein entsprechendes Steuerelement kann die Höhe der Kreismesser 20, 21 über dem Transportsattel 15 nach Fischgröße gesteuert werden.

Der Steg, der nicht von dem in Fischlaufrichtung vorgeschalteten Rückenmesser oder Flankenschneider getrennt wurde, wird nunmehr durch die Gegenlagen 17a, 17b möglicherweise in Verbindung mit den korrespondierenden Kreismessern 20, 21 von der Wirbelsäule 11 getrennt. Damit sind die Filets vollständig vom Grätengerüst einschließlich der Wirbelsäule 11 getrennt und fallen zu beiden Seiten ab. Durch die Leitelemente 34, 35 werden die Filets störungsfrei und lagerichtig auf ein unterhalb der Vorrichtung 10 angeordnetes Transportband geführt.

Für den Fall, dass die von der Wirbelsäule 11 gelösten Filets Rippengräten enthalten, werden die beiden Kreismesser 20, 21 nur zu dem Zweck im Abstand auseinander bewegt, dass der Transportsattel 15 zwischen den Kreismessern 20, 21 entlang gefördert werden kann. In der Höhe bleiben die Kreismesser 20, 21 jedoch unverändert.

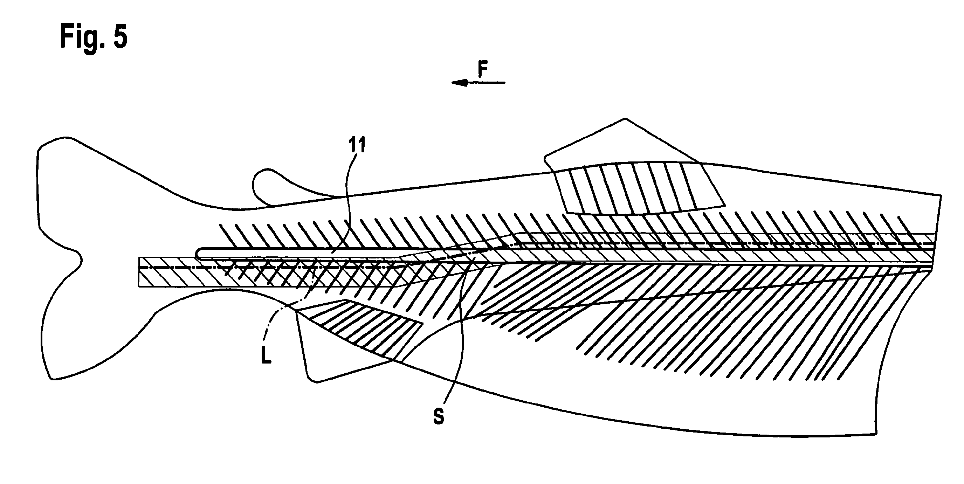

Der durch das beschriebene Verfahren erzielte Verlauf der Kreismesser 20, 21 lässt sich anhand der Figur 5 erkennen. Die gestrichelte Linie L stellt den Weg der Kreismesser 20, 21 durch den Fisch dar. Der schraffierte Bereich S um die Wirbelsäule 11 herum markiert den Bereich, in dem die Kreismesser 20, 21 die Filets durchtrennen.

## Patentansprüche

1. Vorrichtung (10) zum Trennen von Filets von der Wirbelsäule (11) geköpfter, geschlachteter und in ihrer Bauchhöhle geöffneter Fische unter Durchschneiden des von Bauch- und Rückenmessern um die Wirbelsäule (11) belassenen Steges, wobei die Fische auf Transportsätteln (15) transportiert werden, umfassend eine obere Grätenführung (12), eine untere Grätenführung (13) sowie ein Trennaggregat (14), das zum Lösen der Filets von der Wirbelsäule (11) ein Trennmittel (16) umfasst, dem eine korrespondierende Gegenlage (17) zugeordnet ist, wobei das Trennaggregat (14) aus einer Warteposition in eine Arbeitsposition und zurück bewegbar ist, **dadurch gekennzeichnet, dass** die Gegenlage (17) am Trennaggregat (14) angeordnet ist.

2. Vorrichtung nach Anspruch 1, **dadurch gekennzeichnet, dass** das Trennaggregat (14) zwei Teilaggregate (18, 19) umfasst, wobei jedes Teilaggregat (18, 19) ein Kreismesser (20, 21) und eine korrespondierende Gegenlage (17a, 17b) aufweist, und wobei die beiden Teilaggregate (18, 19) zu beiden Seiten des zu bearbeitenden Fisches einander gegenüber liegen und jeweils um eine Schwenkachse I schwenkbar gelagert sind und die Schwenkachsen I im Wesentlichen parallel zu den Grätenführungen (12, 13) verlaufen.

3. Vorrichtung nach Anspruch 2, **dadurch gekennzeichnet, dass** den beiden Teilaggregaten (18, 19) mindestens ein Stellelement (22) zur Ausführung der Schwenkbewegung um die jeweilige Schwenkachse I zugeordnet ist, wobei das Stellelement (22) ein Pneumatikzylinder ist.

4. Vorrichtung nach einem der Ansprüche 1 bis 3, **dadurch gekennzeichnet, dass** beide Teilaggregate (18, 19) über eine Einrichtung (36) zur Synchronisation miteinander in Wirkverbindung stehen, derart, dass beide Teilaggregate (18, 19) durch ein Stellelement (22) schwenkbar sind.

5. Vorrichtung nach Anspruch 3 oder 4, **dadurch gekennzeichnet, dass** das Teilaggregat (18), dem das Stellelement (22) zugeordnet ist, befestigungsfrei mit diesem in Wirkverbindung steht.

6. Vorrichtung nach einem der Ansprüche 3 bis 5, **dadurch gekennzeichnet, dass** beiden Teilaggregaten (18, 19) ein Ausgleichselement (23, 24) zugeordnet ist, derart, dass der Abstand der beiden Teilaggregate (23, 24) zueinander unabhängig vom Stellelement (22) variabel ist, wobei die Ausgleichselemente (23, 24) als Druckzylinder ausgebildet sind.

7. Vorrichtung nach einem der Ansprüche 2 bis 6, **dadurch gekennzeichnet, dass** die Kreismesser (20, 21) einerseits um die jeweilige Schwenkachse I schwenkbar und andererseits in axialer Richtung der Rotationsachsen III ortsfest sind.

8. Vorrichtung nach einem der Ansprüche 2 bis 7, **dadurch gekennzeichnet, dass** die Gegenlage (17a, 17b) und das Kreismesser (20, 21) eines Teilaggregats (18, 19) während der Schwenkbewegung um die Schwenkachse I relativ zueinander feststehend sind.

9. Vorrichtung nach einem der Ansprüche 2 bis 8, **dadurch gekennzeichnet, dass** mindestens einem der beiden Teilaggregate (18, 19) ein Anschlagelement (26) zur Einhaltung eines Mindestabstands zwischen den beiden Kreismessern (20, 21) zugeordnet ist.

10. Vorrichtung nach einem der Ansprüche 2 bis 9, **dadurch gekennzeichnet, dass** beide Teilaggregate (18, 19) um eine Schwenkachse II aus der Warteposition in die Bearbeitungsposition und umgekehrt auf und ab schwenkbar sind, wobei die Schwenkachse II quer zu den Grätenführungen (12, 13) verläuft.

11. Vorrichtung nach einem der Ansprüche 2 bis 10, **dadurch gekennzeichnet, dass** am Trennaggregat (14) für jedes Kreismesser (20, 21) eine Messerabdeckung (28, 29) angeordnet ist, wobei die Messerabdeckungen (28, 29) zusammen mit den Kreismessern (20, 21) um die jeweilige Schwenkachse I des Teilaggregats (18, 19) schwenkbar gelagert sind.

12. Vorrichtung nach Anspruch 11, **dadurch gekennzeichnet, dass** die Messerabdeckungen (28, 29) mit der oberen Grätenführung (12) in Wirkverbindung stehen und relativ zu den Kreismessern (20, 21) bewegbar sind.

13. Vorrichtung nach Anspruch 11 oder 12, **dadurch gekennzeichnet, dass** die Messerabdeckungen (28, 29) und die Kreismesser (20, 21) um dieselbe Rotationsachse III rotierend bzw. schwenkbar ausgebildet sind.

14. Vorrichtung nach einem der Ansprüche 1 bis 13, **dadurch gekennzeichnet, dass** die Vorrichtung (10) zur Bearbeitung von Fischen ausgebildet ist, die in Fischlaufrichtung F Schwanz voraus transportiert werden, wobei in Fischlaufrichtung F vor dem Trennaggregat (14) ein Detektionsmittel (33) zum Erkennen eines einlaufenden Fisches angeordnet ist.

15. Filetiermaschine zum Filetieren geköpfter, geschlachteter und in ihrer Bauchhöhle geöffneter Fische, umfassend Rückenmesser zum Freilegen der Rückenspeichen bis an die Wirbelsäule heran, Bauchmesser zum Freilegen der Bauchspeichen im Schwanzbereich bis an die Wirbelsäule heran, eine Vorrichtung zum Freischneiden der Flankengräten, eine Vorrichtung (10) zum Trennen der Filets von der Wirbelsäule (11) unter Durchschneiden des von Bauch- und Rückenmessern um die Wirbelsäule (11) belassenen Steges, einen endlosen Förderer zum Transport der Fische Schwanz voraus sowie eine Anzahl auf dem Förderer angeordneter Fischsättel zur sicheren Aufnahme der Fische in ihrer Bauchhöhle, **dadurch gekennzeichnet, dass** die Vorrichtung (10) zum Trennen der Filets von der Wirbelsäule (11) nach einem der Ansprüche 1 bis 14 ausgebildet ist.

## Claims

1. Apparatus (10) for separating fillets from the backbones (11) of beheaded, slaughtered fish having open abdominal cavities, cutting through the web left round the backbone (11) by abdominal and dorsal knives, the fish being transported on transport saddles (15), comprising an upper bone guide (12), a lower bone guide (13) and a separating unit (14) which comprises, for detaching the fillets from the backbone (11), a separating means (16) with which is associated a corresponding counter support (17), wherein the separating unit (14) is movable out of a standby position into a working position and back, **characterised in that** the counter support (17) is arranged on the separating unit (14).

2. Apparatus according to claim 1, **characterised in that** the separating unit (14) comprises two part units (18, 19), each part unit (18, 19) having a circular knife (20, 21) and a corresponding counter support (17a, 17b), and wherein the two part units (18, 19) are located opposite each other on both sides of the fish to be processed and each mounted pivotably about a pivot axis I and the pivot axes I run essentially parallel to the bone guides (12, 13).

3. Apparatus according to claim 2, **characterised in that** the two part units (18, 19) are assigned at least one adjusting element (22) for performing the pivot movement about the respective pivot axis I, wherein the adjusting element (22) is a pneumatic cylinder.

4. Apparatus according to any one of claims 1 to 3, **characterised in that** the two part units (18, 19) are operatively connected to each other by a synchronising device (36) such that the two part units (18, 19) are pivotable by one adjusting element (22).

5. Apparatus according to claim 3 or 4, **characterised in that** the part unit (18) which is assigned the adjusting element (22) is operatively connected to the latter without fastening.

6. Apparatus according to any one of claims 3 to 5, **characterised in that** at least one of the two part units (18, 19) is assigned a compensating element (23, 24), such that the distance between the two part units (23, 24) is variable independently of the adjusting element (22), wherein the two part units (18, 19) are assigned a compensating element (23, 24), the compensating elements (23, 24) being designed as pressure cylinders.

7. Apparatus according to any one of claims 2 to 6, **characterised in that** the circular knives (20, 21) are on the one hand pivotable about the respective pivot axis I and on the other hand stationary in the axial direction of the axes of rotation III.

8. Apparatus according to any one of claims 2 to 7, **characterised in that** the counter support (17a, 17b) and the circular knife (20, 21) of a part unit (18, 19) are fixed relative to each other during the pivot movement about the pivot axis I.

9. Apparatus according to any one of claims 2 to 8, **characterised in that** at least one of the two part units (18, 19) is assigned a stop element (26) for maintaining a minimum distance between the two circular knives (20, 21).

10. Apparatus according to any one of claims 2 to 9, **characterised in that** the two part units (18, 19) are pivotable up and down about a pivot axis II out of the standby position into the processing position and vice versa, the pivot axis II running transversely to the bone guides (12, 13).

11. Apparatus according to any one of claims 2 to 10, **characterised in that** a knife cover (28, 29) is arranged on the separating unit (14) for each circular knife (20, 21), wherein the knife covers (28, 29) together with the circular knives (20, 21) are mounted pivotably about the respective pivot axis I of the part unit (18, 19).

12. Apparatus according to claim 11, **characterised in that** the knife covers (28, 29) are operatively connected to the upper bone guide (12) and are movable relative to the circular knives (20, 21).

13. Apparatus according to claim 11 or 12, **characterised in that** the knife covers (28, 29) and the circular knives (20, 21) are rotatable or pivotable about the same axis of rotation III.

14. Apparatus according to any one of claims 1 to 13, **characterised in that** the apparatus (10) is designed for the processing of fish which are transported tail first in the direction of fish travel F, wherein in front of the separating unit (14) in the direction of fish travel F is arranged a detection means (33) for detecting an incoming fish.

15. Filleting machine for filleting beheaded, slaughtered fish having open abdominal cavities, comprising dorsal knives for exposing the back spokes as far as the backbone, abdominal knives for exposing the belly spokes in the tail region as far as the backbone, an apparatus for cutting the flank bones free, an apparatus (10) for separating the fillets from the backbone (11), by cutting through the web left round the backbone (11) by abdominal and dorsal knives, an endless conveyor for transport of the fish tail first and a number of fish saddles arranged on the conveyor for reliably receiving the fish in their abdominal cavities, **characterised in that** the apparatus (10) for separating the fillets from the backbone (11) is designed according to any one of claims 1 to 14.

## Revendications

1. Dispositif (10) pour séparer des filets de la colonne vertébrale (11) de poissons tués, étêtés et éventrés en coupant la nervure laissée autour de la colonne vertébrale (11) par des couteaux ventraux et dorsaux, les poissons étant transportés sur des étriers de transport (15), ledit dispositif comportant un guide d'arête supérieur (12), un guide d'arête inférieur (13) ainsi qu'une unité de séparation (14) qui comporte un moyen de séparation (16) qui est destiné à détacher les filets de la colonne vertébrale (11) et auquel est associé une butée correspondante (17), l'unité de séparation (14) étant déplaçable d'une position d'attente dans une position de travail et inversement, **caractérisé en ce que** la butée (17) est disposée au niveau de l'unité de séparation (14).

2. Dispositif selon la revendication 1, **caractérisé en ce que** l'unité de séparation (14) comporte deux sous-unités (18, 19), chaque sous-unité (18, 19) comportant un couteau circulaire (20, 21) et une butée correspondante (17a, 17b), et les deux sous-unités (18, 19) étant placées l'une en face de l'autre par rapport aux deux côtés du poisson à travailler et étant montées de façon à pouvoir pivoter chacune autour d'un axe de pivotement I et les axes de pivotement I s'étendant sensiblement parallèlement aux guides d'arête (12, 13).

3. Dispositif selon la revendication 2, **caractérisé en ce que** au moins un élément de commande (22) destiné à effectuer le mouvement de pivotement autour de l'axe de pivotement I correspondant est associé aux deux sous-unités (18, 19), l'élément de commande (22) étant un cylindre pneumatique.

4. Dispositif selon l'une des revendications 1 à 3, **caractérisé en ce que** les deux sous-unités (18, 19) sont en liaison active l'une avec l'autre par le biais d'un dispositif (36) de synchronisation de sorte que les deux sous-unités (18, 19) sont pivotées par un élément de commande (22).

5. Dispositif selon la revendication 3 ou 4, **caractérisé en ce que** la sous-unité (18), à laquelle est associé l'élément de commande (22), est en liaison active avec celui-ci sans fixation.

6. Dispositif selon l'une des revendications 3 à 5, **caractérisé en ce qu'**un élément de compensation (23, 24) est associé aux deux sous-unités (18, 19) de sorte que l'écartement des deux sous-unités (23, 24) est variable indépendamment de l'élément de commande (22), les éléments de compensation (23, 24) étant conformés en cylindre de compression.

7. Dispositif selon l'une des revendications 2 à 6, **caractérisé en ce que** les couteaux circulaires (20, 21) sont aptes à pivoter autour de l'axe de pivotement I correspondant et sont d'autre part fixes dans une direction axiale des axes de rotation III.

8. Dispositif selon l'une des revendications 2 à 7, **caractérisé en ce que** la butée (17a, 17b) et le couteau circulaire (20, 21) d'une sous-unité (18, 19) sont immobiles l'un par rapport à l'autre pendant le mouvement de pivotement autour de l'axe de pivotement I.

9. Dispositif selon l'une des revendications 2 à 8, **caractérisé en ce qu'**un élément d'appui (26) destiné à maintenir une distance minimale entre les deux couteaux circulaires (20, 21) est associé à au moins une des deux sous-unités (18, 19).

10. Dispositif selon l'une des revendications 2 à 9, **caractérisé en ce que** les deux sous-unités (18, 19) sont aptes à pivoter suivant un mouvement montant et descendant autour d'un axe de pivotement II de la position d'attente dans la position de travail et inversement, l'axe de pivotement II s'étendant transversalement aux guides d'arête (12, 13).

11. Dispositif selon l'une des revendications 2 à 10, **caractérisé en ce qu'**un capot de couteau (28, 29) est disposé au niveau de l'unité de séparation (14) pour chaque couteau circulaire (20, 21), les capots de couteau (28, 29) étant montés de façon à pouvoir pivoter conjointement avec les couteaux circulaires (20, 21) autour de l'axe de pivotement I correspondant de la sous-unité (18, 19).

12. Dispositif selon la revendication 11, **caractérisé en ce que** les capots de couteau (28, 29) sont en liaison active avec le guide d'arête supérieur (12) et sont aptes à se déplacer par rapport aux couteaux circulaires (20, 21).

13. Dispositif selon la revendication 11 ou 12, **caractérisé en ce que** les capots de couteau (28, 29) et les couteaux circulaires (20, 21) sont conformés de façon à pouvoir tourner ou pivoter autour du même axe de rotation III.

14. Dispositif selon l'une des revendications 1 à 13, **caractérisé en ce que** le dispositif (10) est conformé pour traiter des poissons qui sont transportés la queue devant par référence à la direction F de défilement des poissons, un moyen de détection (33) destiné à détecter un poisson entrant étant disposé en avant de l'unité de séparation (14) par référence à la direction F de défilement des poissons.

15. Machine à découper des filets destinée à découper des filets de poissons tués, étêtés et éventrés, ladite machine comportant des couteaux dorsaux destinés à enlever les rayons dorsaux jusqu'à proximité de la colonne vertébrale, des couteaux ventraux destiné à enlever les rayons ventraux au niveau de la queue jusqu'à proximité de la colonne vertébrale, un dispositif destiné à découper les arêtes de flanc, un dispositif (10) destiné à séparer les filets de la colonne vertébrale (11) en coupant la nervure laissée autour de la colonne vertébrale (11) par des couteaux ventraux et dorsaux, un transporteur sans fin destiné à transporter les poissons la queue devant ainsi qu'un certain nombre d'étriers de poisson disposés sur le transporteur et destinés à recevoir de façon sûre les poissons dans leur cavité abdominale, **caractérisée en ce que** le dispositif (10) de séparation des filets de la colonne vertébrale (11) est conformé selon l'une des revendications 1 à 14.
